# EUROPEAN PATENT APPLICATION

(11) **EP 2 484 508 A1**
(43) Date of publication of application: **08.08.2012**
(21) Application number: 10820278.9
(22) Date of filing: 27.08.2010
(51) Int. Cl.: B29C 45/57, B29C 45/26, B29L 11/00

(54) **APPARATUS FOR MANUFACTURING RESIN MOLDED ARTICLE FOR OPTICAL ELEMENT, AND METHOD FOR MANUFACTURING RESIN MOLDED ARTICLE FOR OPTICAL ELEMENT**

(30) Priority: 29.09.2009 JP 2009224844
(71) Applicant: Konica Minolta Opto, Inc., Hachioji-shi, Tokyo 192-8505 (JP)
(72) Inventor: HARA Shinichiro, Hachioji-shi Tokyo 192-8505 (JP); MARUHATA Mitsuhiro, Hachioji-shi Tokyo 192-8505 (JP); MAJIMA Toshiyuki, Hachioji-shi Tokyo 192-8505 (JP)
(74) Representative: Henkel, Breuer & Partner
(86) International application number: PCT/JP2010/064582
(87) International publication number: WO 2011/040158

(57) **Abstract**

Disclosed is an apparatus for manufacturing a resin molded article for an optical element, said resin molded article being formed by injecting a molten resin into a cavity, and having a hollow section inside. The apparatus has: a pressurized fluid injecting means, which forms the hollow section by injecting a pressurized fluid into the molten resin injected into the cavity; and a pressing means which presses a movable part in the same direction as the molding die clamping direction. The movable part is moved with respect to a first molding die or a second molding die, in the opposite direction to the molding die clamping direction against the pressing force applied by means of the pressing means, with a pressure increase in the molding dies, said pressure increase being caused by the injection of the pressurized fluid into the cavity. The movable part is moved by the pressing force with respect to the first molding die or the second molding die, in the same direction as the molding die clamping direction, with a pressure reduction in the molding die, said pressure reduction being caused by discharge of the pressurized fluid.

## Description

### TECHNICAL FIELD

The present invention relates to a manufacturing apparatus and a method for a resin molded article for an optical element and in particular to a manufacturing apparatus and a method for a resin molded article for an optical element having an optical surface on an area of a surface of a base material formed by the resin and a hollow section formed by injecting a pressurized fluid inside the base material.

### PRIOR ART

As to digital devices represented by a copying machine and a laser printer, further enhancement of recording density has been increasingly demanded since high image quality and high resolution have been required in recent years. However, to achieve the high resolution, highly accurate control of each component to be used in the apparatus is naturally required. As to the optical element representing one ofthe components, further enhancement of accuracy is required for an optical surface which condenses, deflects and deforms an incident light from a light source by transmission and reflection. In recent yeas, blue color laser having short wavelength which enables a stable output and long life span has been drawing attention. Since the above laser can form a further minute spot, an optical element having a high surface accuracy corresponding to the laser has been required.

As a higher accuracy has been required, a major technical issue, which has not been noticeable, has grown apparent. A typical issue is an effect of deformation of the optical surface caused by warpage and shirinkage which are caused by contraction when the resin is cured during resin injection molding. In particular, in an optical element having a fθ characteristic, the effect ofthe warpage in the scanning direction becomes more apparent, and as a result it has became difficult to ensure the quality of the highly accurate optical element with conventional injection molding. Also, in case the shortwave laser beam, for example, the blue color laser is used, weather resistance of the resin lens is an additional obstacle to maintain the highly accurate surface.

To address the above problems, the inventors focused attention on an effect of hollow molding and studied application on the optical element. By forming a hollow section by hollow molding, a tensile stress at time of volume contraction of the resin to cause the warpage and shirinkage of the molded article is released by the hollow section and appears as shrinkage on a surface of the hollow section, thus the warpage and shirinkage to occur on the surface of the molded article are inhibited.

Here, as a method to form the hollow section in the resin molded article, there is a gas assist molding method as fallow. For example, using a mold provided with a cavity having a mold surface to form an optical reflection surface, a molten resin is injected into the cavity, a pressurized fluid is charged into the molten resin in the cavity to form the hollow section, and cool the molten resin in the cavity to be solidified, thereafter open the metal mold to remove the resin molded article from the mold.

As a technology to from the hollow section having a desired shape in the resin molded article, for example, there is known a technology that by providing a moving core, having a portion of the metal mold surface of the cavity, in a movable manner and by providing a moving core moving device to move the moving core, the moving core is moved to a forward position towards inside the cavity in advance, then molten resin is injected into the cavity so as to fill the molten resin in the cavity completely, and at the same time the pressurized fluid is charged into the molten resin in the cavity and then after a predetermined time elapses from the start of the charging the pressurized fluid, the moving core is moved from the forward position towards an outside of the cavity to a backward position so as to increase the volume of the cavity and make extension of a front end of the hollow section easy, whereby the hollow section is formed to a desired portion (for example, Patent Document 1: 2004-25789)

### PRIOR ART TECHNICAL DOCUMENT

### PATENT DOCUMENT

Patent Document 1: JP2004-25789

### SUMMARY

### PROBLEMS TO BE SOLVED

In the conventional technology cited in the Patent Document 1, by forming the hollow section in the molten resin in the cavity, the resin molded article having a desired surface shape can be manufactured, however when the molten resin in the cavity is cooled and solidified, there was a problem that the warpage on the resin molded article occurs due to volume contraction ofthe resin. Also, a configuration that the moving core is moved in the opposite direction to a mold clamping direction of the mold during the charging process of the pressurized fluid is too complicated and it is difficult to provide such configuration in the conventional mold for the resin molded article for the optical element where an inside space is limited. Further, since the pressurized fluid is injected at the same time when the molten resin is filled in the cavity completely, the front end ofthe hollow section cannot extend sufficiently. For example, in an elongated resin molded article, in case the optical surface is provided across an entire surface of the resin molded article in a longitudinal direction, forming of the hollow section across the entire optical surface is difficult.

The present invention has an object to solve the above problems and to provide the manufacturing apparatus and the method of the resin molded article for the optical element which enables to inhibit deterioration of accuracy of the optical surface of the base material due to volume contraction of the resin.

### MEANS TO SOLVE THE PROBLEM

Item 1. To solve the above problems a first embodiment of the present invention is a manufacturing apparatus of an resin molded article for an optical element, having a first mold, a second mold movable in a mold clamping direction with respect to the first mold, and a movable part movable in the mold clamping direction and a direction opposite to the mold clamping direction with respect to one of the first mold and the second mold, wherein the resin molded article for the optical element having a hollow section inside is formed by injecting a molten resin in a cavity configured with the first mold, the second mold and the movable part, the manufacturing apparatus, comprising: a pressurized fluid charging device to charge a pressurized fluid into the molten resin injected into the cavity to form the hollow section; and a bias member to bias the movable part in the mold clamping direction, wherein by charging the pressurized fluid into the cavity, an inside mold pressure is increased so as to move the movable part in the opposite direction to the mold clamping direction with respect to the first mold or the second mold against a bias force of the bias member, and by discharging the pressurized fluid in the cavity the inside mold pressure is decreased so as to move the movable part in the mold clamping direction with respect to the first mold or the second mold by the bias force of the bias member.
Item 2. A second embodiment of the present invention is the manufacturing apparatus of the resin molded article for the optical element of item 2, wherein as viewed from the mold clamping direction, the movable part is provided with an area to form an entire transfer surface to transfer an optical surface of the resin molded article for the optical element
Item 3. A third embodiment of the present invention is the manufacturing apparatus of the resin molded article for the optical element of claim 1 or 2, wherein one of the first mold and the second mold includes a transfer surface to transfer an optical surface of the resin molded article for the optical element and another one of the first mold and the second mold includes the movable part.
Item 4. A forth embodiment of the present invention is a manufacturing method of a resin molded article for an optical element using a manufacturing apparatus having a first mold, a second mold movable in a mold clamping direction with respect to the first mold and a movable part movable in the clamping direction and a direction opposite to the clamping direction with respect to one of the first mold and the second mold, wherein the resin molded article for the optical element having a hollow section inside is formed by injecting a molten resin in a cavity configured with the first mold, the second mold and the movable part, the manufacturing method, comprising steps of: injecting the molten resin into the cavity; charging a pressurized fluid into the molten resin to form the hollow section and to move the movable part in the direction opposite to the mold clamping direction in accordance with an increase of an inside mold pressure caused by charging the pressurized fluid, and discharging the pressurized fluid in the molten rein to move the movable part in the mold clamping direction in accordance with a decrease of the inside mold pressure.

### EFFECT OF THE INVENTION

According to the present invention, with the configuration to move the movable part using the bias force of the bias device by pressure change due to charging of the pressurized fluid into the cavity and in particular with the configuration to move the movable part in the mold clamping direction by pressure decrease when the pressurized fluid is discharged, an amount of deformation of the base material after mold releasing is minimized and deterioration of the accuracy of the optical surface corresponding to the volume contraction of the resin is inhibited.

### BRIEF DESCRIPTION OF THE DRAWINGS

Fig. 1 is a cross-sectional view of a base material of a fθ mirror related to an embodiment of the present invention, wherein the base material is cut along a longitudinal direction.
Fig. 2 is a front view of an injection molding machine related to an embodiment ofthe present invention.
Fig. 3a is a partial front view of an injection molding machine when filling a molten resin.
Fig. 3b is a partial front view of an injection molding machine when charging a pressurized gas.
Fig. 3c is a partial front view of an injection molding machine when discharging a pressurized gas.
Fig. 4 is a diagram showing relations among a movable part position, a screw position and an inside mole pressure in a manufacturing process of an fθ mirror.

### DETAILED DESCRIPTION OF PREFERRED EMBODIMENT

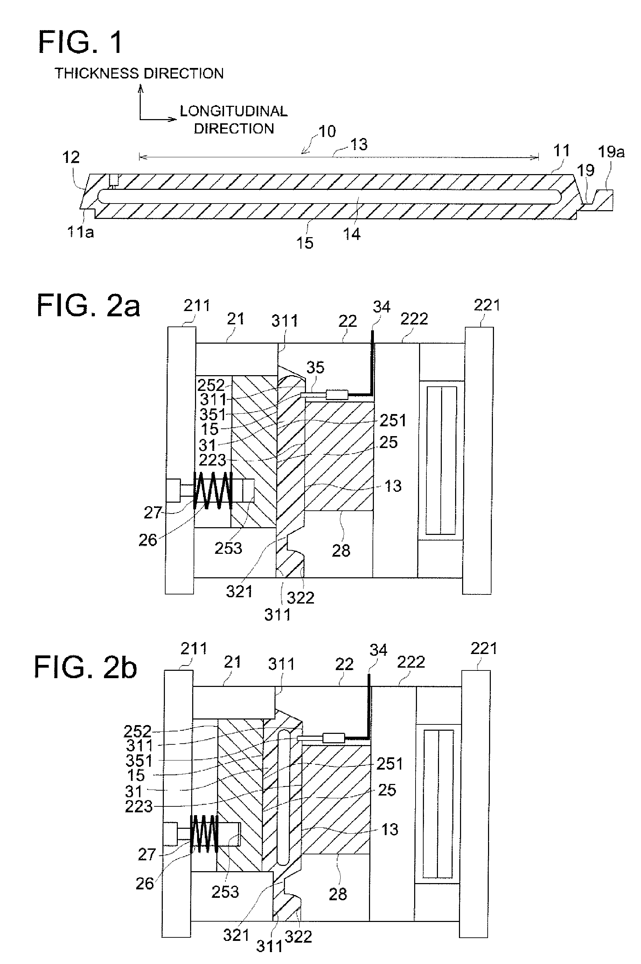

An embodiment of the present invention will be described with reference to the drawings. Figs. 1 to 4 show an embodiment of the present invention.

### (Resin Molded Article for Optical Element)

First, a resin molded article of an optical element to be manufactured by the injection molding machine related to the present embodiment of the present invention will be described. The resin molded article for the optical element is an optical element suitable for various applications such as electrical parts, automotive parts, medical use, safety use, construction use and household use which require specularity, dimensional accuracy, lightness, safeness, durability and economic efficiency.

An exemplary optical element related to the present invention is an fθ mirror 10 installed in a laser scanning optical device to introduce emitted light emitted from a light source, so as to converge the light at a polygon mirror and to give an fθ characteristic to a scanning beam which scans along with rotation of the polygon mirror at a predetermined speed.

Next, the fθ mirror 10 will be described with reference to Fig.1. Fig. 1 is a cross-sectional view of the fθ mirror 10 related to an embodiment of the present invention where the fθ mirror 10 is cut along a longitudinal direction.

The fθ mirror 10 includes, a base material in a shape of an elongated plate, an optical surface (mirror surface) 13 occupying the surface 11 of the base material and a hollow section 14 located inside the base material. A length of the hollow section 14 in the longitudinal direction is longer than a length of the optical surface 13 in the longitudinal direction, further both ends of the hollow section are formed outside the optical surface 13 in the longitudinal direction. Whereby, a tensile stress generated by contraction due to curing of the resin is released into the hollow section, and the warpage in the longitudinal direction due to volume contraction of the resin is inhibited across the entire optical surface 13 thus a surface accuracy is enhanced.

A surface roughness Ra ofthe optical surface 13 is preferred to fall within the range of Ra ≤ 5 (nm). Whereby, for example, the surface accuracy applicable to a short wavelength of not more than 500 nm can be achieved. Also, a range of 2(nm) < Ra ≤ 5(nm) is more preferable. Incidentally, by rising the optical surface 13 from the base material 11 in a thickness direction of the base material across the entire surface, the molded article is inhibit to hold the mold due to volume contraction of the resin, thus occurrence of distortion of the optical surface 13 by a mold releasing resistance can be inhibit.

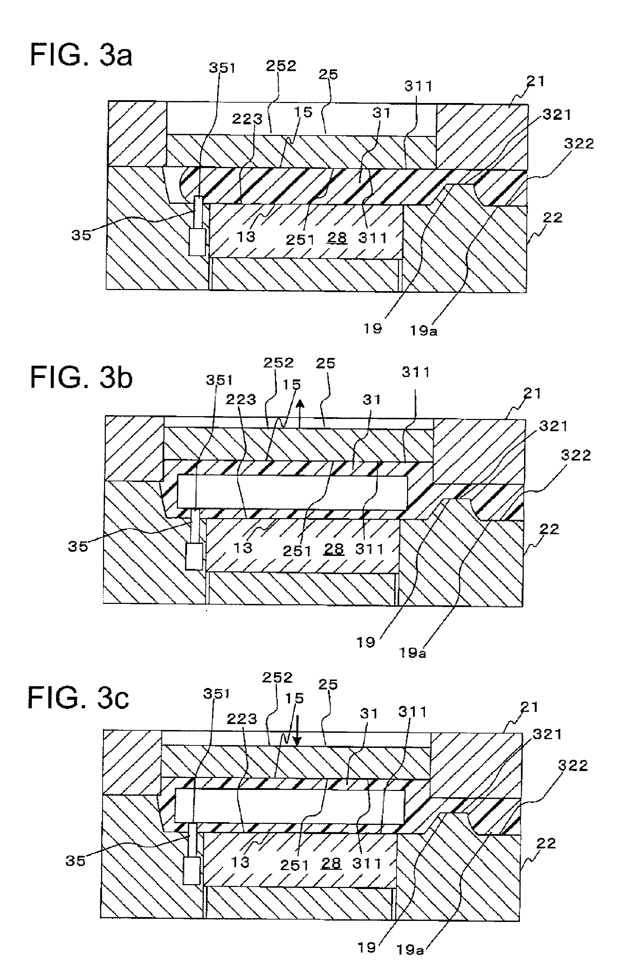

A peripheral wall 12 of the fθ mirror 10 has a draft angle. By forming the draft angle at the mold surface 311 of the cavity 31 of the second mold 22 (refer to Figs. 2 and 3), the mold releasing resistance is reduced when releasing the fθ mirror 10 from the second mold 22, whereby the distortion and deformation of the optical surface 13 of the fθ mirror 10 can be inhibited. Also, durability of the mold can be enhanced. Here, the draft angle is preferred to be set between 1° and 10° considering a material and thickness (a dimension in a thickness direction shown by Fig. 1) of the fθ mirror 10.

The fθ mirror 10 is also provided with a pressured surface 15. The pressured surface 15 is formed in a shape projecting from a surface 11a of the base material in the thickness direction which is on other side of the optical surface 13. The pressured surface 15 lowered from the surface 11a of the base material is shown in Fig. 1. The pressured surface 15 is a surface formed by transferring a moving surface 251 of a movable part 25 to be described. Incidentally, while the pressured surface 15 is provided on the surface 11 a of the base material on the other side ofthe optical surface 13, the pressure surface 15 can be the optical surface 13 or the surface 11, which is on the same side on the base material as the optical surface 13.

When the fθ mirror 10 is released from the mold, a gate shaped resin 19 formed by the molten resin filled in a gate 321 and a runner shaped resin 19a formed by the molten resin filled in a runner 322 are connected to the fθ mirror 10 via the gate shaped resin 19a.

### (Injection Molding Machine)

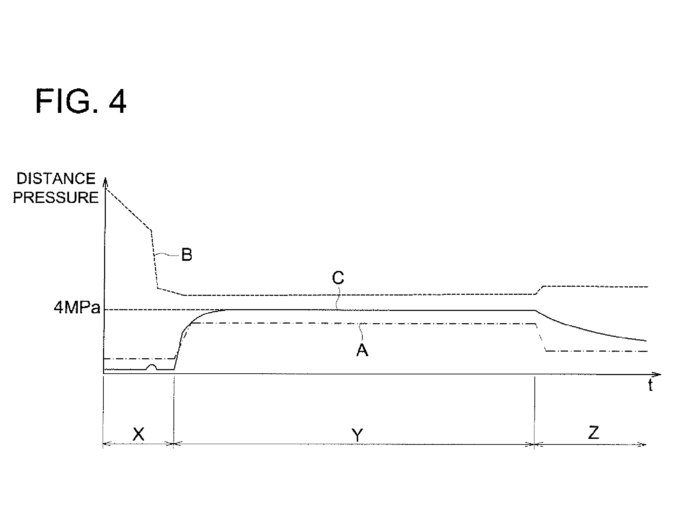

Next, an injection molding machine to manufacture the base material of the fθ mirror 10 will be described with reference to Figs. 2 to 4. Fig. 2 is a front view of the injection molding machine related to an embodiment of the present invention and Fig. 3a to 3c are partial front views of the injection molding machine. Fig. 3a is a partial front view of the injection molding machine while filling the molten resin, Fig. 3b is a partial front view of the injection molding machine while charging the pressurized gas and Fig. 3c is a partial front view of the injection molding machine while discharging the pressurized gas. Fig. 4 shows relation among a position of the movable part, a position of a screw and an inside mold pressure in the manufacturing process of the fθ mirror 10.

The injection molding machine is provided with the mold having a cavity 31, a filling device (not illustrated) to fill the molten resin into the cavity 31, a pressurized fluid charging device 34 to charge the pressurized gas (pressurized fluid) into the molten resin filled and a control device to respectively control filling of the molten resin, halting of molten resin filling, starting pressurized gas charging, halting pressurized gas charging and discharging the pressurized gas from the hollow section.

### (Mold)

The mold is configured with a first mold 21 and a second mold 22 wherein the second mold 22 approaches to the first mold 21 for mold clamping with the first mold 21 and recedes from the first mold 21 so as to release the base material. The cavity 31 is formed in the first mold 21 and the second mold 22 by clamping the first mold 21 and the second mold 22.

To the cavity 31, a gate 321, a runner 322 and a spool (not illustrated) are formed continuously. A heater (not illustrated) is provided along the cavity 31, the runner 322 and the spool (path of the metal mold). By providing the heater, solidification of the molten resin is inhibited when the molten resin comes in contact with the cavity 31 and the paths of the mold. Otherwise, the molten resin looses flowability and is solidified by cooling due to thermal conduction. Instead of the heater, a flow path for temperature control can be provided.

The first mold 21 is fixed on a first mold mount 211. The first mold 21 is provided with a movable part (moving core) 25 so that the movable part 25 moves along a direction for mold clamping. The movable part 25 is provided with a moving surface 251, which is a portion of the mold surface 311 of the cavity formed to transfer a predetermined shape to the molten resin injected in the cavity 31. By transferring the moving surface 251 of the movable part 25, the pressured surface 15 is formed on the base material of the fθ mirror 10.

In the movable part 25, a guide hole 25 is formed on a reverse surface 252 which is on an opposite side of the moving surface. A guide pin 26 to fit with the guide hole 253 is provided at the first mold mount 211. The movable part 25 is guided by the guide pin 26 so as to move in the mold clamping direction (a forward direction towards the cavity 31 side) and in an opposite direction thereto (a backward direction towards the first mold mount 211 side). Incidentally, the guide hole 253 can be provided at the first mold mount 211 and the guide pin 26 can be provided at the movable part 25.

The bias device 27 is a spring member wound in a spiral configuration around the guide pin 26 located between the first mold mount 211 and the reverse surface 252 of the movable part 25 in a pressurized state. The bias device 27 biases the movable part 25 in the same direction as the mold clamping direction by its spring force. Since the bias device 27 is a spring member wound around the guide pin 26, an installation space for the bias device 27 can be minimized. Incidentally, while only one bias device 27 is shown in Fig. 2, two or more bias devices 27 can be provided.

The movable part 25 is configured to be capable of reciprocation motion between a forward end position on the cavity 31 side and a backward end position on the first mold mount 211 side. Incidentally, stoppers to stop the movable part 25 at the forward end position and the backward end position are not necessary. Also, a stopper to stop the movable part 25 at any positions between the forward end position and the backward end position is not necessary. Further, no active driving device to move the movable part 25 forward and backward is necessary. Thus a large installation space is not necessary in the mold

The movable part 25 stops at a predetermined position between the forward end position and the backward end position when the following conditions are satisfied. Namely, the bias force of the bias device 27 is a pressure force in a direction that the moving surface 251 of the movable part 25 presses the pressured surface 15. Also, a pressure in the cavity 31 is an inside mold pressure in a direction that the pressured surface 15 pushes back the moving surface 251 of the movable part 25. Further a tensile stress when the molten resin adhered on the moving surface 251 of the movable part 25 contracts in the volume is a pulling force in a pulling direction that the pressured surface 15 pulls the moving surface 251 of the movable part 25. When a resultant force of the pressing force by the moving surface 251 and the pulling force by which the moving surface 251 is pulled equates to the inside mold pressure which the moving surface 251 is pressed, the movable part 25 stops at the predetermined position between the forward end position and the backward end position.

Fig. 2a shows the movable part 25 is at a stop immediately before charging the pressurized gas into the molten resin in the cavity 31. Immediately before charging the pressurized gas, the moving surface 251 of the movable part 25 and the mold surface 311 of the first mold 21 are in the same plane without having steps between them. Also, Fig. 2b shows the movable part 25 after charging the pressurized gas into the molten resin in the cavity 31. After charging the pressurized gas, by the pressured surface 15 to press the moving surface 251 with a force greater than the bias force of the bias device 27, the moving surface 251 of the movable part 25 has already moved backward to the first mold mount 211 side. By moving the moving surface 251 backward, an amount of deflection of the bias device 27 configured with the sprint member increases, then the bias force of the bias device 27 increase whereby, the moving surface 251 pushes back the pressured surface 15 with a pressure greater than that in a state shown by Fig. 2a and as a result, the movable part 25 stops at a position where the pressing force by the moving surface 251 equates to the inside mold pressure which the moving surface receives. Also by pressing back the pressurized surface 15 with a large pressure force, the optical surface 13 is continuously adhered onto the transfer surface 223 of the mirror surface core 28, thus the surface accuracy of the optical surface 13 can be enhanced.

Further, as viewed from the metal mold clamping direction, since the movable part 25 is provided with an area to form the entire transfer surface 223 to transfer the optical surface 13 of the fθ mirror (optical element) 10 while the optical surface 13 is continuously adhered onto the transfer surface 223 of the mirror surface core 28, the transfer surface 223 is pressed evenly, thus the optical performance is less likely to be affected. In the above point of view also, the surface accuracy of the optical surface 13 can be enhanced.

Though it is not shown by Fig. 2b, in case the pressurized gas charged into the molten resin in the cavity 31 is discharged, the inside mold pressure, in a direction that the pressured surface 15 presses back the moving surface 251 of the movable part 25, reduces thus by the inside mold pressure, the pressing force of the moving surface 251 to press the pressurized surface 15 increases. Also, when discharging the pressurized gas, cooling and solidification of the molten resin in the cavity 31 start, then the resin adhering on the moving surface 251 of the movable part 25 contracts, whereby a tensile force of the pressured surface 15 in a direction to pull the moving surface 251 of the movable part 25 is generated. Whereby, the moving surface 251 of the movable part 25 moves forward towards the cavity 31 side. Thus the movable part 25 stops at a position where a resultant force of the pressing force of the moving surface251 and the tensile force to pull the moving surface 251 equates to the inside mold pressure to press the moving surface 251. Also, in accordance with volume contraction of the molten resin, the moving surface 251 moves forward to press the pressured surface 15 continuously whereby the optical surface 13 continuously adheres on the transfer surface 223 of the mirror surface core 28, then the optical surface 13 can maintain a shape having values substantially equal to expected design values. After the volume contraction of the molten resin reduced to a minute amount, the molds are opened to release the base material of the fθ mirror 10 (resin molded article) from the mold, whereby deterioration of the surface accuracy of the optical surface 13 can be inhibited. Further while the optical surface 13 is continuously adhering on the transfer surface 223 ofthe mirror core 28, the movable part 25 is provided with the area to form the entire transfer surface 223 to transfer the optical surface 13 of the fθ mirror 10 whereby the transfer surface 223 is pressed evenly. In the above regards also, deterioration of the surface accuracy of the optical surface 13 can be inhibit.

Incidentally, the mold provided with the movable part 25 can be the second mold 22 instead of the first mold 21 and can be both the first mold 21 and the second mold 22. Also, instead of the guide pin 26, a guide channel can be provided at the first mold 21, whereby by fitting the movable part 25 in the guide channel, the movable part 25 can be guided. Incidentally in case the mold is configured by disposing the movable part 25 and the cavity 31 vertically up and down, the bias force of the bias device 27 includes a weight of the movable part 25. Also, the bias force of the bias device 27 is not limited to the force by the spring of the spring member, and other known devices can be obviously applied. Incidentally, as types of the springs, a coil spring and a gas spring are preferred.

The second mold 22 is fixed on the second mold mount 221 via a base plate 222. The mirror surface core 28 is provided in the second mold 22. The mirror core 28 is provided with a transfer surface 223 to transfer the optical surface 13 onto the molten resin injected into the cavity 31. The transfer surface 223 is formed by cutting work to have a surface roughness Ra of not more than 5 nm so as to achieve the surface roughness on the optical surface 13 of Ra ≤ 5(nm).

A gas nozzle 35 is provided at the second mold 22. The gas nozzle 35 penetrates in a through hole (not illustrated) formed in the metal mold surface 311 of the cavity 31 except in the transfer surface 223, and the gas nozzle 35 is provided with a front end section 351 protruding in the cavity 31. The gas nozzle 35 charges the pressurized gas from the front end section 351 into the molten resin in the cavity 31 so as to form the hollow section 14 inside the base material.

The second mold 22 is provided with an ejector pin (not illustrated) to release the base material of the fθ mirror 10 from the second mold 22. When the second mold 22 recedes from the first mold by a predetermined distance, the ejector pin comes in contact with the second mold mount plate 221 and moves relatively with respect to the second mold 22 then a front end surface ofthe ejector pin protrudes into the cavity 31 from the mold surface 311 so that the base material of the fθ mirror 10 is released from the second mold 22.

Next, there will be described a device to fill the molten resin into the cavity 31 of the mold and a device to charge the pressurized gas into the molten resin filled, as well as a control device to control the devices thereof.

### (Filling Device)

The filling device is preferred to be disposed to fill the resin from a lateral side of the fθ mirror 10 to a longitudinal direction. A short side of the fθ mirror 10 is shown as a lower end side of the cavity in Figs 2a to 2c.

With the spool (path of the mold), a jetting port of the filling device outside the figure is communicated. The filling device is provided with a screw (unillustrate) to extrude the molten resin from the jetting port. The screw fills the molten resin from the jetting port into the cavity 31 via the spool, a runner 322, and a gate 321.

### (Pressurized Fluid Charging Device)

The pressurized fluid charging device 34 is provided with a tank (not illustrated) to reserve the pressurized gas, a solenoid vale (not illustrate) and the gas nozzle 35. The front end section 351 of the gas nozzle 35 has a jetting port section communicating with the cavity 31. The control device controls the solenoid valve to open and close. The pressurized gas to be used is the one which does not react with or mixed with the resin. For example, an inert gas is cited. In view points of cost and safety, the nitrogen gas is preferred because of uninflammable and non-addictive property, also it can be obtained in an economical method.

### (Control Device)

The control device starts to charge the pressurized gas into the molten resin filled in the mold by receiving a detection signal when the front end section ofthe molten resin filled in the hollow section 14 reaches to a predetermined position. Also, the control device keeps pressure in the cavity 13. Further the control device stops charging of the pressurized gas after a predetermined time period has elapsed from the start of charging the pressurized gas. Thereafter, the control device starts to discharge the pressurized gas. The time periods of charging the pressurized gas, keeping the pressure in the cavity 13 and discharging the pressurized gas are described in Fig. 4.

A position of the movable part, a position of the screw and the inside mold pressure in the manufacturing process of the fθ mirror 10, are shown by a dashed-dotted line A, broken lines B and a solid line C respectively in Fig. 4. In the Fig. 4 the time t is denoted by a horizontal axis and the pressure and length are denoted by a vertical axis. In a resin injecting period (X in Fig. 4), the screw of the filling device moves at a low speed from a start position to an end position, then from a predetermined middle position it moves at a high speed and at a vicinity of the end position it moves at the low speed again. In the above period, the inside mold pressure in the cavity 31 is a low pressure.

In the pressurized gas charging period and the pressure keeping period (Y in Fig. 4), charging of the pressurized gas starts, whereby the inside mold pressure in the cavity 31 increased rapidly. Since the increased inside mold pressure is greater than the bias force of the bias device 27, the movable part 25 moves backward. By the backward movement of the movable part 25, the bias force of the bias device 27 increases then when the increased bias force by the bias device 27 equates to the inside mold pressure, the movable part 25 stops. Also, the inside mold pressure is kept at 4 Mpa. Further, the screw position is kept at the end position.

In the pressurized gas discharging period (Z in Fig.4), discharging ofthe pressurized gas starts, as a result the inside mold pressure in the cavity 31 gradually reduces. Since the decreased inside mold pressure becomes smaller than the bias force of the bias device 27, also since the molten resin in the cavity 31 starts to cool and consolidate, and the tensile force due to the volume contraction of the molten resin to pull the moving surface 251 of the movable part 25 is generated, the movable part 25 moves forward Namely, the movable part 25 follows the molten resin during the volume contraction. Thus the movable part 25 stops at a position where the resultant force of the pressing force by the moving surface 251 and the tensile force equates to the inside mold pressure.

### (Materials of the Resin Mold Article for the Optical Element)

Next, materials of the fθ mirror 10 will be described. The materials of the fθ mirror 10 are, for example, polycarbonate, polyethylene terephthalate, polymethylmethacrylate, cycloolefin polymer, or resins consist of two or more the aforesaid materials.

Among the above materials, polycarbonate and cycloolefin polymer are preferable to be used for the fθ mirror 10.

Next, materials to configure the optical surface 13 of the fθ mirror 10 will be described. As the materials to configure the optical surface 13, for example, silicon monoxide, silicon dioxide and alumina are cited. As film forming methods, know film forming methods such as a vacuum disposition method, a spattering method, and an ion plating method can be used

### (Manufacturing Method)

Next, the manufacturing method of the fθ mirror 10 will be described with reference to Fig. 3 and Fig. 4.

Before filling the molten resin into the cavity 31 of the mold, by approaching the second mold 22 with respect to the first mold 21, the first mold 21 and the second mold 22 are clamped to form the cavity 31. When this occurs, the moving surface 251 of the movable part 25 and a mold surface 311 of the first mold 21 are substantially in a same plane without having a step between them. Also, a cylinder (not illustrated) of the filling device is set to reach at a predetermined temperature. The control device controls the filling device to rotate the screw and to inject the molten resin from the jetting port of the filling device (injection process), thus the molten resin is filled into the cavity 31 via the spool, the runner 322 and the gate 321.

The molten resin is further filled into the cavity 31. When the front end of the filled molten resin reaches to a predetermined position, the control device receives a detection signal thereof and controls the filling device to stop filling the molten resin into the cavity 31. Next the control device controls the pressurized fluid charging device 34 to open the solenoid valve, whereby the pressurized gas in the tank (unillustrated) is charged into the cavity 31 from the front end section 351 ofthe gas nozzle 35. The movable part 25 when the molten resin is filled in the cavity 31 is shown in Fig. 3a In Fig. 3a, the moving surface 251 of the movable part 25 and the mold surface 311 of the first mold 21 are in the same plane without having the step in between.

The pressurized gas is charged in the longitudinal direction into the filled molten resin (pressurized gas charging process). Whereby, the hollow section extending in the longitudinal direction can be formed in the resin. Also, when the front end of the molten resin reaches to the predetermined position, filing of the molten resin stops by receiving the detection signal thereof By charging the pressurized gas, the inside mold pressure increases and the increased inside mold pressure becomes greater than the pressing force of the moving surface 251, whereby the movable part 25 moves backward. The movable part 25 moved backward is shown in Fig. 3b. By moving the movable part 25 backward, distortion of the spring member representing the bias device 27 increases and the bias force increases. The movable part 25 stops at a position where the bias force equates to the inside mold pressure.

Namely, the movable part 25 moves backward not by an active driving device and stops not by a stopper. Since the bias device 27 to move and stop the movable part 25 is a spring member wound around the guide pin, a large space is not required in the mold.

Next by thermal conductance of the mold, the molten resin cools and consolidates. During cooling and solidification the hollow section 14 is kept at a predetermined pressure (pressure keeping process). By keeping the pressure, the surface of the base material is pressed onto the transfer surface whereby, surface transferability of the base material can be enhanced. During the pressurized gas charging process to the pressure keeping process, the optical surface 13 is formed on the base material surface. Next, the pressurized gas in the hollow section 14 is discharged.

By discharging the pressurized gas, the inside mold pressure decreases. Also, by cooling and solidifying the molten resin, volume contraction of the molten resin occurs then in accordance with decreasing of the inside mold pressure the tensile force is generated on the moving surface 251 of the movable part 25. Since the resultant force of the bias force and the tensile force becomes greater than the inside mold pressure, the mobile part 25 moves forward and the moving surface 251 follows the molten resin during volume contracting. The movable part 25 having moved forward is shown in Fig. 3c. Since the movable part 25 moves forward, the moving surface 251 follows the molten resin, and the molten resin is continuously pressed, the optical surface 13 is continuously pressed by the transfer surface 223 and a predetermined shape is transferred onto the optical surface 13. Whereby, deterioration of accuracy of the optical surface of the fθ mirror 10 can be inhibited.

By the second mold 22 to recede from the first mold 21 by a predetermined distance, the ejector plate (not illustrated) comes in contact with the second mold mount plate 221 and the front surface of the ejector pin protrudes from the mold surface. 311 in the cavity 31 of the second mold 22. Whereby, the fθ mirror 10 can be released form the second mold 22.

### DESCRIPTION OF THE SYMBOLS

- 10: fθ mirror
- 11: Surface of base material
- 12: Peripheral wall
- 13: Optical surface
- 14: Hollow section
- 15: Pressured surface
- 19: Gate shaped resin
- 19a: Runner shaped resin
- 21: First mold
- 211: First mold mount plate
- 22: Second mold
- 221: Second mold mount plate
- 222: Base plate
- 223: Transfer surface
- 25: Moving part
- 251: Moving surface
- 252: Reverse surface
- 523: Guide hole
- 26: Guide pin
- 27: Bias device
- 28: Mirror surface core
- 31: Cavity
- 311: Mold surface of Cavity
- 321: Gate
- 322: Runner
- 34: Pressurized fluid charging device
- 35: Gas nozzle
- 351: Front end section of gas nozzle

## Claims

1. A manufacturing apparatus of an resin molded article for an optical element, having a first mold, a second mold movable in a mold clamping direction with respect to the first mold, and a movable part movable in the mold clamping direction and a direction opposite to the mold clamping direction with respect to one ofthe first mold and the second mold, wherein the resin molded article for the optical element having a hollow section inside is formed by injecting a molten resin in a cavity configured with the first mold, the second mold and the movable part, the manufacturing apparatus, comprising:
a pressurized fluid charging device to charge a pressurized fluid into the molten resin injected into the cavity to form the hollow section; and
a bias member to bias the movable part in the mold clamping direction,
wherein by charging the pressurized fluid into the cavity, an inside mold pressure is increased so as to move the movable part in the opposite direction to the mold clamping direction with respect to the first mold or the second mold against a bias force of the bias member, and by discharging the pressurized fluid in the cavity the inside mold pressure is decreased so as to move the movable part in the mold clamping direction with respect to the first mold or the second mold by the bias force of the bias member.

2. The manufacturing apparatus of the resin molded article for the optical element of claim 1, wherein as viewed from the mold clamping direction, the movable part is provided with an area to form an entire transfer surface to transfer an optical surface of the resin molded article for the optical element

3. The manufacturing apparatus of the resin molded article for the optical element of claim 1, wherein one of the first mold and the second mold includes a transfer surface to transfer an optical surface of the resin molded article for the optical element and another one of the first mold and the second mold includes the movable part.

4. A manufacturing method of a resin molded article for an optical element using a manufacturing apparatus having a first mold, a second mold movable in a mold clamping direction with respect to the first mold and a movable part movable in the clamping direction and a direction opposite to the clamping direction with respect to one ofthe first mold and the second mold, wherein the resin molded article for the optical element having a hollow section inside is formed by injecting a molten resin in a cavity configured with the first mold, the second mold and the movable part, the manufacturing method, comprising steps of:
injecting the molten resin into the cavity;
charging a pressurized fluid into the molten resin to form the hollow section and to move the movable part in the direction opposite to the mold clamping direction in accordance with an increase of an inside mold pressure caused by charging the pressurized fluid, and
discharging the pressurized fluid in the molten rein to move the movable part in the mold clamping direction in accordance with a decrease of the inside mold pressure.
